# EUROPÄISCHE PATENTANMELDUNG

(11) **EP 4 809 878 A1**
(43) Veröffentlichungstag der Anmeldung: **23.09.2026**
(21) Anmeldenummer: 26162354.0
(22) Anmeldetag: 04.03.2026
(51) Int. Cl.: A47J 37/06, A47J 37/07

(54) **GRILLGERÄT, VORZUGSWEISE OUTDOOR-KÜCHE**

(30) Priorität: 17.03.2025 DE 102025110034
(71) Anmelder: Miele & Cie. KG, 33332 Gütersloh (DE)
(72) Erfinder: Grothues, Leon, 48336 Sassenberg (DE)

(57) **Zusammenfassung**

Die Erfindung betrifft ein Grillgerät (1), vorzugsweise ein Gasgrillgerät (1), mit wenigstens einer Hitzequelle (12), vorzugsweise einem Gasbrenner (12), und mit wenigstens zwei Grillrostelementen (13, 14), welche jeweils ausgebildet sind, in der Horizontalen (X, Y) nebeneinander oberhalb der Hitzequelle (12) angeordnet zu werden, wobei die beiden Grillrostelemente (13, 14) jeweils ausgebildet sind, Grillgut entlang der vertikalen Achse (Z) auf sich drauf aufzunehmen. Das Grillgerät ist dadurch gekennzeichnet, dass die beiden Grillrostelemente (13, 14) ausgebildet sind, ferner übereinander angeordnet zu werden und eine gemeinsame zumindest im Wesentlichen geschlossene Grillfläche (15) zu bilden.

## Beschreibung

Die Erfindung betrifft ein Grillgerät.

Die Zubereitung von Nahrungsmitteln erfolgt seit langer Zeit in speziellen Räumen von Gebäuden, welche als Küche bezeichnet werden. Dort sind entsprechend Küchengeräte zur Zubereitung sowie zur Lagerung von Speisen stationär vorgesehen, d.h. feststehend angeordnet bzw. in Küchenzeilen eingebaut. Zu diesen Küchengeräten gehören beispielsweise Kochfelder und Backöfen sowie Kühlschränke.

Ebenso wird zur Zubereitung von Nahrungsmitteln seit langer Zeit das Grillen angewendet. Beim Grillen wird das Gargut im Wesentlichen durch Wärmestrahlung gegart und an der Oberfläche geröstet. Das Durchgaren wird durch die Wärmeleitung, auch Konduktion genannt, von der Oberfläche des Garguts in das Gargut hinein bewirkt.

Das Grillen kann über einem offenen Feuer erfolgen, was daher üblicherweise im Freien praktiziert wird. Das offene Feuer kann durch brennbare Materialien wie z.B. durch Holzkohle aber auch durch Gas erzeugt werden. Als Hitzequelle dienen somit Holzfeuer oder Holzglut bzw. die Gasflamme. Das Grillen im Freien kann mit einem nicht unerheblichen Aufwand verbunden sein, müssen doch ein Grillgerät, Brennmaterial bzw. eine Gasquelle und das Grillgut etc. ins Freie transportiert, dort aufgebaut, betrieben und später wieder abgebaut und abtransportiert werden.

Alternativ kann das Grillen auch über ein elektrisch betreibbares Grillgerät mittels elektrischer Heizschleifen erfolgen, welches auch als elektrisches Grillgerät bezeichnet werden kann. Dies bringt den Vorteil mit sich, dass aufgrund der Vermeidung eines offenen Feuers diese Art des Grillens auch im Haus durchgeführt werden kann. Hierzu können mobile oder stationäre elektrische Grillgeräte verwendet werden. Es ist jedoch auch die Beheizung von Grillgeräten für den Außenbereich mit elektrisch betriebener Hitzequelle bekannt.

Elektrogrills erfreuen sich dabei auch im Außenbereich, d.h. Outdoor, wachsender Beliebtheit, da diese im Vergleich zu mit Gas oder Kohle betriebenen Grills verschiedene Vorteile aufweisen. Insbesondere die einfache Handhabung, das vergleichsweise schnelle Aufheizverhalten und die geringen Emissionen z.B. aufgrund gar keiner bzw. lediglich geringer Feinstaubentwicklung gehören dazu. Auch entfällt der Aufwand, Holzkohle oder Gasflaschen zu beschaffen, zu lagern, zu transportieren sowie am Ort der Benutzung des Grills verstauen zu müssen, was auch den Anblick des Grills beeinträchtigen kann.

Es ist heutzutage auch bekannt, weitere Möglichkeiten zur Zubereitung von Speisen vergleichbar dem bekannten Grillgerät nach außerhalb der Küche bzw. nach außerhalb des Hauses zu verlagern. Entsprechend werden derartige Gargeräte als Outdoor-Küchen bezeichnet, welche vergleichbar den Gargeräten in der Küche im Inneren eines Hauses, auch Indoor-Küchen genannt, mit Gas oder elektrisch betrieben werden. Derartige Outdoor-Küchen können neben einem Grillgerät auch ein Kochfeld und einen Ofen sowie Staumöglichkeiten, einen Kühlschrank und ein Spülbecken aufweisen. Auch bei Outdoor-Küchen können die o.g. Vorteile elektrischer Grillgeräte umgesetzt und genutzt werden.

Derartige elektrische Outdoor-Grillgeräte sind üblicherweise auf die elektrische Versorgung bzw. auf die elektrische Speisung mit Haushaltsstrom mit 230 V ausgelegt. Dies gilt vergleichbar auch für die elektrische Speisung von Outdoor-Küchen bzw. deren elektrischen Gargeräten wie elektrische Kochfelder, Induktionskochfelder und elektrische Öfen sowie sonstiger elektrischer Geräte der elektrischen Outdoor-Küchen wie beispielsweise einen Kühlschrank. Outdoor-Küchen können jedoch zusätzlich oder alternativ auch Gasgrillgeräte aufweisen, welche vorzugsweise mit einer elektrischen Zündung ausgestattet sein können.

Zu den Möglichkeiten des Grillens, ob gasbetrieben, holzkohle- bzw. holzbetrieben oder elektrisch betrieben, gehört auch die Verwendung von Grillplatten, welche flächig geschlossen ausgebildet sind und von unten erhitzt werden, so dass das Grillgut oben auf die Grillplatte aufgelegt und zubereitet werden kann. Die obere Oberfläche derartiger Grillplatten, welche der Aufnahme des Grillguts dient, ist üblicherweise glatt ausgebildet, wobei auch geriffelte Oberflächen möglich sind. In jedem Fall bildet die obere Oberfläche bzw. die Oberseite eine Grill- bzw. Bratfläche. Zu den Grillplatten gehören die sog. Planchas, welche üblicherweise in Spanien sowie in Frankreich verwendet werden. Auch kann das japanische Teppan als Grillplatte angesehen werden. Dies gilt ebenso für Pizzasteine, welche der Zubereitung bzw. dem Backen von Pizzen durch Erhitzen von unten bei beispielsweise 350°C dienen. Derartige Grillplatten sind üblicherweise ca. 5 mm bis 20 mm dick.

In jedem Fall unterscheiden sich Grillplatten von den Gittern der Rostgrille, bei denen die Hitze zum einen direkt durch die Zwischenräume der Gitterstäbe auf das Gargut wirkt und zum anderen indirekt über die erhitzen Grillstäbe. Bei Grillplatten sind geschlossen ausgebildet und somit wird das Grillgut lediglich indirekt über die erhitzte Oberfläche gegart. Die geschlossene Grill- bzw. Bratfläche der Grillplatten hat den Vorteil, dass das Grillgut mit Flüssigkeiten wie beispielsweise Alkohol übergossen werden kann, ohne dass die Flüssigkeit ins Feuer darunter tropfen und ein "Fettfeuer" erzeugen kann, was bei Rostgrillen der Fall ist. Dies gilt ebenso für das Fett an sich oder auch für Marinaden, welche bei Rostgrillen in das Feuer tropfen können. Aus diesem Grund des rein indirekten "Grillens" kann bei Grillplatten auch kein Fett oder Flüssigkeiten in eine offene Flamme gelangen bzw. tropfen, wodurch sonst krebserregenden polyzyklischen Kohlenwasserstoffe entstehen könnten. Auch können Grillgüter wie beispielsweise Fleisch, Fisch, Gemüse und Desserts ohne zusätzliche Hilfsmittel auf Grillplatten zubereitet werden, ohne durch die Gitter eines Rostgrills fallen zu können.

Für Grillgeräte jeglicher Art sind Grillplatten bisher lediglich als separates Zubehör bzw. als Accessoires bekannt, d.h. sind separat erhält und nicht im Lieferumfang eines Grillgeräts enthalten, anders als die Grillroste, um das Grillgerät als Rostgrill zu nutzen. Entsprechend muss ein Benutzer eines Grillgeräts bisher bei Bedarf eine Grillplatte zusätzlich erwerben, um das Grillgerät als Plancha-Grill oder dergleichen nutzen zu können.

Nachteilig ist hierbei, dass dies entsprechende Kosten sowie den Aufwand der Beschaffung für den Benutzer des Grillgeräts verursacht. Auch führt dies zu einem zusätzlichen Platzbedarf bei Nichtgebrauch, um die Grillplatte zu lagern. Ferner führt die Herstellung, die Lagerung sowie der Transport der zusätzlichen Grillplatte zu einem entsprechenden Aufwand bzw. zu einem entsprechenden Verbrauch an Ressourcen.

Der Erfindung stellt sich somit das Problem, ein Grillgerät, insbesondere eine Outdoor-Küche, zur Verfügung zu stellen, um die Vorteile bzw. die Eigenschaften von Grillplatten zumindest teilweise, vorzugsweise im Wesentlichen, nutzen zu können, ohne hierzu eine Grillplatte zu verwenden.

Erfindungsgemäß wird dieses Problem durch ein Grillgerät, durch ein Grillrostelementepaar sowie durch eine Outdoor-Küche mit den Merkmalen der unabhängigen Patentansprüche gelöst. Vorteilhafte Ausgestaltungen und Weiterbildungen der Erfindung ergeben sich aus den nachfolgenden abhängigen Ansprüchen.

Somit betrifft die Erfindung ein Grillgerät, vorzugsweise ein Gasgrillgerät, mit wenigstens einer Hitzequelle, vorzugsweise einem Gasbrenner, und mit wenigstens zwei Grillrostelementen, welche jeweils ausgebildet sind, in der Horizontalen nebeneinander oberhalb der Hitzequelle angeordnet zu werden, wobei die beiden Grillrostelemente jeweils ausgebildet sind, Grillgut entlang der vertikalen Achse auf sich drauf aufzunehmen. Derartige Grillgerät sind als Rostgrille bekannt.

Das erfindungsgemäße Grillgerät ist dadurch gekennzeichnet, dass die beiden Grillrostelemente ausgebildet sind, ferner übereinander angeordnet zu werden und eine gemeinsame zumindest im Wesentlichen geschlossene Grillfläche zu bilden. Hierzu können die beiden Grillrostelemente, welche gemeinsam auch als Grillrostelementepaar bezeichnet werden können, gleich bzw. spiegelsymmetrisch ausgebildet sein, was die Umsetzung vereinfachen kann.

Der Erfindung liegt dabei die Erkenntnis zugrunde, dass die Grillroste bzw. die Grillrostelemente der bekannten Rostgrille Öffnungen aufweisen, durch welche hindurch die aufsteigende Hitze der jeweiligen Hitzequelle und insbesondere eines offenen Feuers als Hitzequelle das Grillgut, welches oben auf dem jeweiligen Grillrostelement bzw. auf der Oberseite des jeweiligen Grillrostelements liegt, direkt erreichen und hierdurch garen kann. Zusätzlich erhitzt die Hitzequelle auch das Grillrostelement selbst, welches dann das Grillgut zusätzlich garen kann.

Erfindungsgemäß werden nun die beiden Grillrostelemente derart ausgebildet, dass sie zum einen einzeln nebeneinander wie zuvor beschrieben verwendet werden können, um ein gemeinsames direktes und indirektes Grillen bzw. Garen wie bisher bekannt weiterhin zu ermöglichen. Zum anderen können die beiden Grillrostelemente jedoch zusätzlich auch übereinander angeordnet bzw. gelegt werden, um eine gemeinsame und im Wesentlichen bzw. möglichst geschlossene Grillfläche zu bilden, so dass die Hitze der Hitzequelle das Grillgut möglichst nicht mehr direkt erreichen kann, sondern lediglich ein indirektes Garen mittels der erhitzen Grillrostelemente gemeinsam erfolgen kann.

Auf diese Art und Weise kann ohne zusätzliche Vorrichtungen und damit auch ohne zusätzlichen Aufwand, ohne zusätzliche Kosten und bzw. oder ohne zusätzlichen erforderlichen Platzbedarf bei Nicht-Gebrauch die Möglichkeit für den Benutzer des erfindungsgemäßen Grillgeräts geschaffen werden, die Eigenschaften zum Garen bzw. zum Grillen mittels einer Grillplatte zumindest im Wesentlichen bzw. prinzipiell zu nutzen, ohne eine zusätzliche Grillplatte wie beispielsweise eine Plancha oder dergleichen anschaffen zu müssen. Dies kann die Nutzungsmöglichkeiten des erfindungsgemäßen Grillgeräts erhöhen, ohne zusätzlichen Aufwand und ohne zusätzliche Kosten zu verursachen.

Gemäß einem Aspekt der Erfindung weisen die beiden Grillrostelemente jeweils eine Mehrzahl von Roststäben auf, welche jeweils parallel zueinander verlaufen, wobei die beiden Grillrostelemente jeweils eine Mehrzahl von Zwischenräumen aufweisen, welche jeweils unmittelbar zueinander benachbarte Roststäbe zueinander beabstanden. Dies kann eine konkrete Möglichkeit der Umsetzung darstellen.

Gemäß einem weiteren Aspekt der Erfindung sind die Zwischenräume des zweiten Grillrostelements jeweils ausgebildet, genau einen Roststab des ersten Grillrostelements aufzunehmen, und die Zwischenräume des ersten Grillrostelements sind jeweils ausgebildet, genau einen Roststab des zweiten Grillrostelements aufzunehmen. Dies kann eine konkrete Möglichkeit der Umsetzung darstellen, um eine möglichst geschlossene Grillfläche zu erreichen.

Gemäß einem weiteren Aspekt der Erfindung sind die Zwischenräume der beiden Grillrostelemente jeweils ausgebildet, den jeweiligen Roststab spielfrei aufzunehmen. Dies kann eine konkrete Möglichkeit der Umsetzung darstellen, um eine möglichst geschlossene Grillfläche zu erreichen. Hierdurch kann auch eine zumindest im Wesentlichen für Flüssigkeiten und bzw. oder Fett dichte Grillfläche geschaffen werden, um das Heruntertropfen von Flüssigkeit, Marinade, Fett und dergleichen auf die Hitzequelle bzw. in dessen Flamme zu vermeiden, wodurch sonst "Fettfeuer" entstehen könnten.

Gemäß einem weiteren Aspekt der Erfindung weisen die beiden Grillrostelemente jeweils wenigstens ein Paar von Verbindungselementen auf, welche die Roststäben feststehend miteinander verbinden. Dies kann eine konkrete Möglichkeit der Umsetzung darstellen. Hierdurch kann auf einfache Art und Weise eine feste und stabile Anordnung der Roststäbe zueinander ermöglicht werden.

Gemäß einem weiteren Aspekt der Erfindung sind die beiden Grillrostelemente ausgebildet, entlang der vertikalen Achse entgegengesetzt orientiert zu werden, um übereinander angeordnet zu werden. Dies kann eine konkrete Möglichkeit der Umsetzung darstellen.

Gemäß einem weiteren Aspekt der Erfindung weist das Grillgerät ferner ein Gehäuse mit einem Innenraum auf, in welchem die Hitzequelle angeordnet ist, wobei das Gehäuse einen Gehäuserand aufweist, welcher den Innenraum und die Hitzequelle umschließt, wobei die Roststäbe jeweils ausgebildet sind, mit ihren Enden auf dem Gehäuserand aufzuliegen, um nebeneinander oder übereinander oberhalb der Hitzequelle angeordnet zu werden. Dies kann eine konkrete Möglichkeit der Umsetzung darstellen. Auf diese Art und Weise kann eine einfache aber sicher haltbare Anordnung der Grillroste auf dem Gehäuse des Grillgeräts ermöglicht werden.

Gemäß einem weiteren Aspekt der Erfindung sind die beiden Grillrostelemente, vorzugsweise mittels wenigstens eines Paar von Scharnieren, umklappbar miteinander verbunden, um durch Umklappen entweder nebeneinander oder übereinander oberhalb der Hitzequelle angeordnet zu werden. Auf diese Art und Weise können die beiden Grillrostelemente gemeinsam gehandhabt werden sowie nicht verlorengehen.

Die vorliegende Erfindung betrifft auch ein Grillrostelementepaar, d.h. ein Paar von Grillrostelementen, zur Verwendung bei einem Grillgerät wie zuvor beschrieben. Hierdurch kann ein Grillrostelementepaar zur Verfügung gestellt werden, um bei einem Grillgerät wie zuvor beschrieben genutzt zu werden, um die entsprechenden zuvor beschriebenen Eigenschaften und Vorteile dort umsetzen zu können.

Die vorliegende Erfindung betrifft auch eine Outdoor-Küche mit wenigstens einem Grillgerät wie zuvor beschrieben. Somit kann das zuvor beschriebene erfindungsgemäße Grillgerät als Bestandteil einer Outdoor-Küche genutzt werden.

Ein Ausführungsbeispiel der Erfindung ist in den Zeichnungen rein schematisch dargestellt und wird nachfolgend näher beschrieben. Es zeigt
- Figur 1: eine Darstellung eines erfindungsgemäßen Grillrostelementepaares im ausgebreiteten Zustand von oben mit nach oben orientierten Roststäben;
- Figur 2: die Darstellung der Figur 1 entlang der Längsachse;
- Figur 3: die Darstellung der Figur 1 mit nach unten orientierten Roststäben;
- Figur 4: die Darstellung der Figur 3 entlang der Längsachse;
- Figur 5: eine Darstellung eines erfindungsgemäßen Grillgeräts von oben ohne erfindungsgemäßes Grillrostelementepaar;
- Figur 6: die Darstellung der Figur 5 entlang der Längsachse;
- Figur 7: die Darstellung der Figur 5 mit erfindungsgemäßem Grillrostelementepaar im ausgebreiteten Zustand;
- Figur 8: die Darstellung der Figur 7 entlang der Längsachse;
- Figur 9: eine Darstellung der einzelnen erfindungsgemäßen Grillrostelemente entlang der Längsachse mit zueinander hin orientierten Roststäben sowie entlang der vertikalen Achse zueinander beabstandet;
- Figur 10: die Darstellung der Figur 9 im übereinander angeordneten Zustand;
- Figur 11: die Darstellung der Figur 10 entlang der Querachse;
- Figur 12: eine Darstellung des erfindungsgemäßen Grillrostelementepaares im übereinander angeordneten Zustand von oben; und
- Figur 13: die Darstellung der Figur 12 entlang der Längsachse.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querachse Y bilden gemeinsam die Horizontale X, Y, welche auch als horizontale Ebene X, Y bezeichnet werden kann.

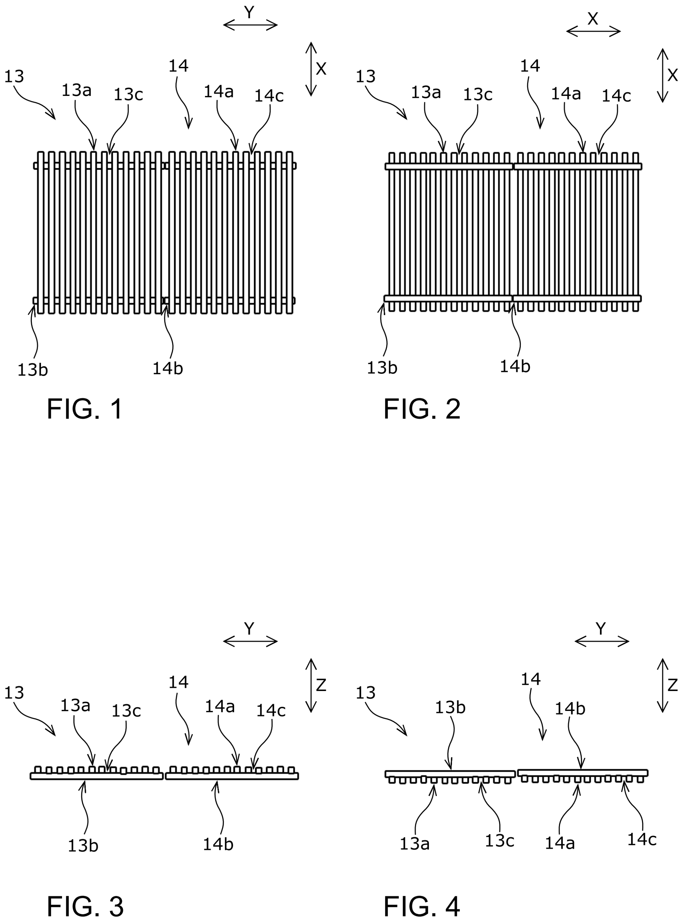

Figur 1 zeigt eine Darstellung eines erfindungsgemäßen Grillrostelementepaares 13, 14 im ausgebreiteten Zustand von oben mit nach oben orientierten Roststäben 13a, 14a. Figur 2 zeigt die Darstellung der Figur 1 entlang der Längsachse X. Figur 3 zeigt die Darstellung der Figur 1 mit nach unten orientierten Roststäben 13a, 14a. Figur 4 zeigt die Darstellung der Figur 3 entlang der Längsachse X.

Es werden zwei Grillrostelemente 13, 14 vorgesehen, welche auch als Grillrostelementepaar 13, 14 bezeichnet werden können. Die beiden Grillrostelemente 13, 14 sind spiegelsymmetrisch bzw. gleich ausgebildet und weisen jeweils eine Mehrzahl von Roststäben 13a, 14a auf, welche jeweils parallel zueinander verlaufen. Die beiden Grillrostelemente 13, 14 weisen jeweils eine Mehrzahl von Zwischenräumen 13c, 14c auf, welche jeweils unmittelbar zueinander benachbarte Roststäbe 13a, 14a zueinander beabstanden. Die beiden Grillrostelemente 13, 14 weisen jeweils ein Paar von Verbindungselementen 13b, 14b auf, welche die Roststäben 13a, 14a feststehend miteinander verbinden.

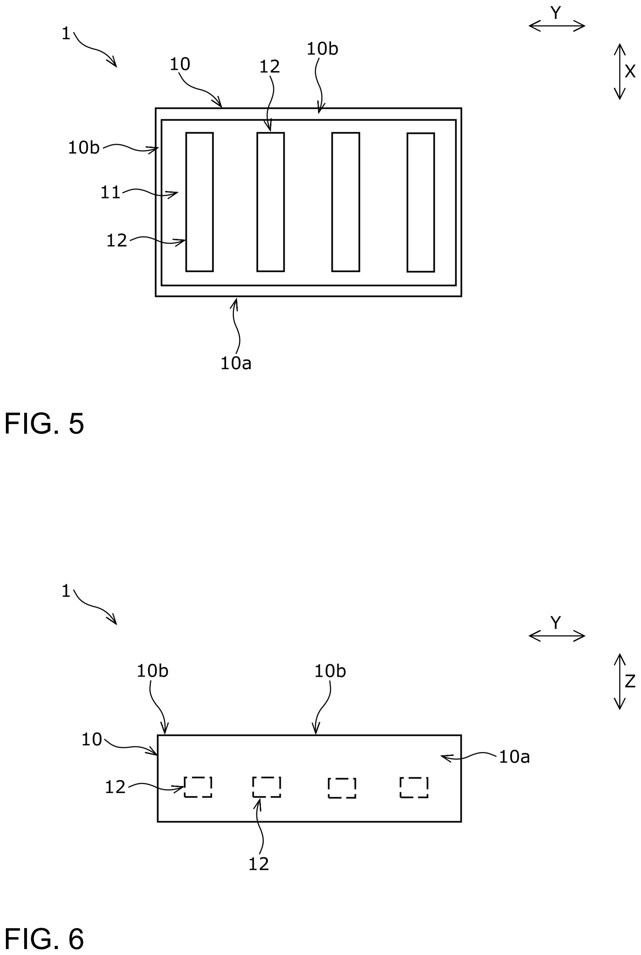

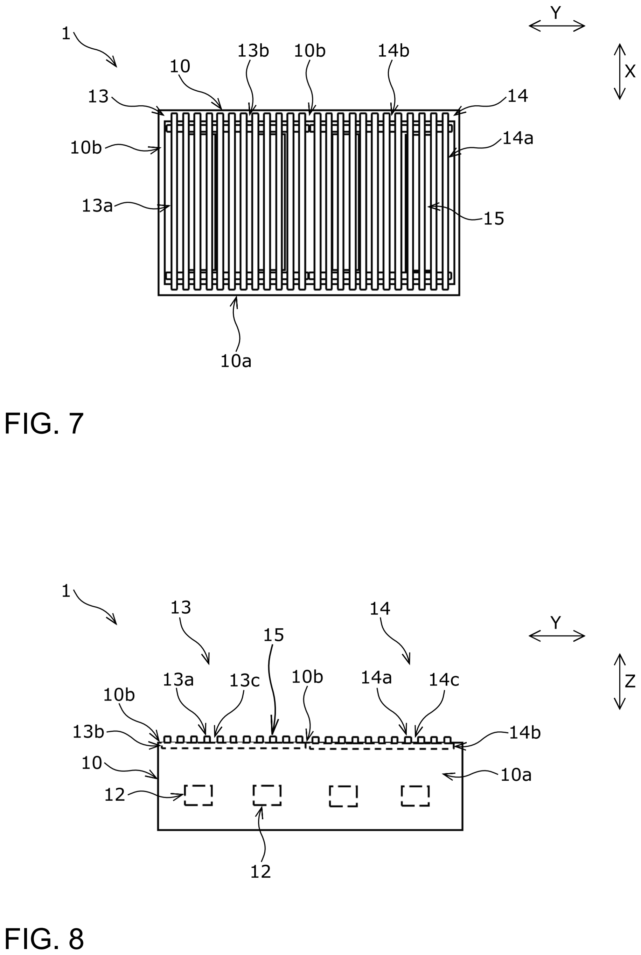

Figur 5 zeigt eine Darstellung eines erfindungsgemäßen Grillgeräts 1 von oben ohne erfindungsgemäßes Grillrostelementepaar 13, 14. Figur 6 zeigt die Darstellung der Figur 5 entlang der Längsachse X. Figur 7 zeigt die Darstellung der Figur 5 mit erfindungsgemäßem Grillrostelementepaar 13, 14 im ausgebreiteten Zustand. Figur 8 zeigt die Darstellung der Figur 7 entlang der Längsachse X.

Das Grillgerät 1 weist ein Gehäuse 10 mit einem Innenraum 11 auf, in welchem eine Hitzequelle 12 in Form von vier parallel zueinander ausgerichteten Gasbrennern 12 angeordnet ist. Das Gehäuse 10 weist einen Gehäuserand 10b auf, welcher den Innenraum 11 und die Gasbrenner 12 umschließt. Die Roststäbe 13a, 14a der beiden Grillrostelemente 13, 14 liegen jeweils mit ihren Enden auf dem Gehäuserand 10b des Gehäuses 10 des Grillgeräts 1 auf.

Auf diese Art und Weise können die beiden Grillrostelemente 13, 14, wie bisher bekannt, in der Horizontalen X, Y nebeneinander oberhalb der Garbrenner 12 angeordnet werden, um Grillgut (nicht dargestellt) entlang der vertikalen Achse Z auf sich drauf aufzunehmen. Entsprechend kann das Grillgut entlang der vertikalen Achse Z von unten von der Hitze der Gasbrenner 12 erreicht werden, so dass das Grillgut direkt gegart werden kann. Zusätzlich werden die Roststäbe 13a, 14a der beiden Grillrostelemente 13, 14 von der Hitze der Gasbrenner 12 erreicht und erhitzt, so dass die Roststäbe 13a, 14a der beiden Grillrostelemente 13, 14 ebenfalls das Grillgut garen können, wie bisher bekannt.

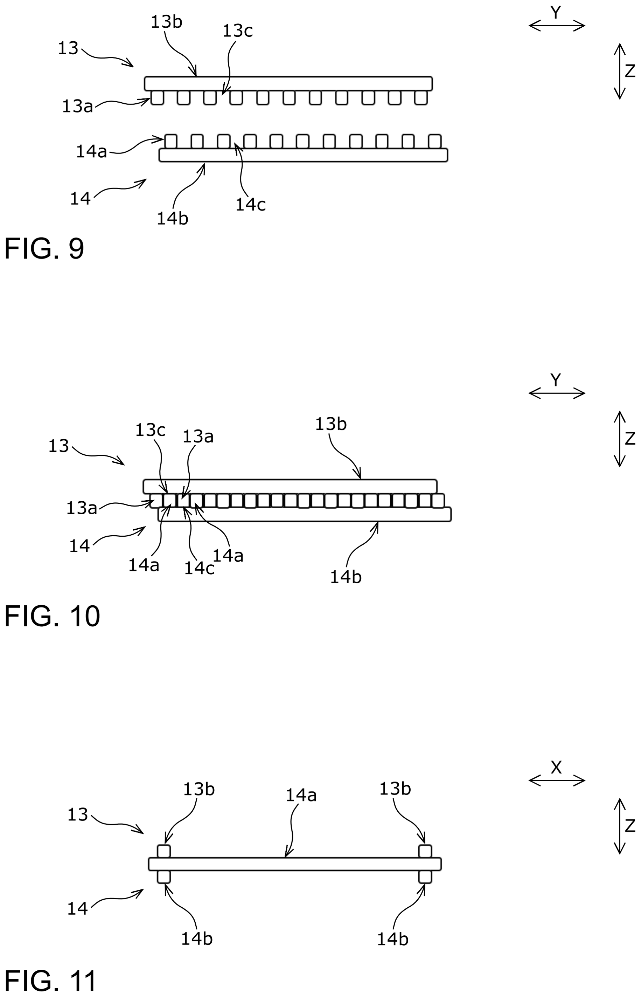

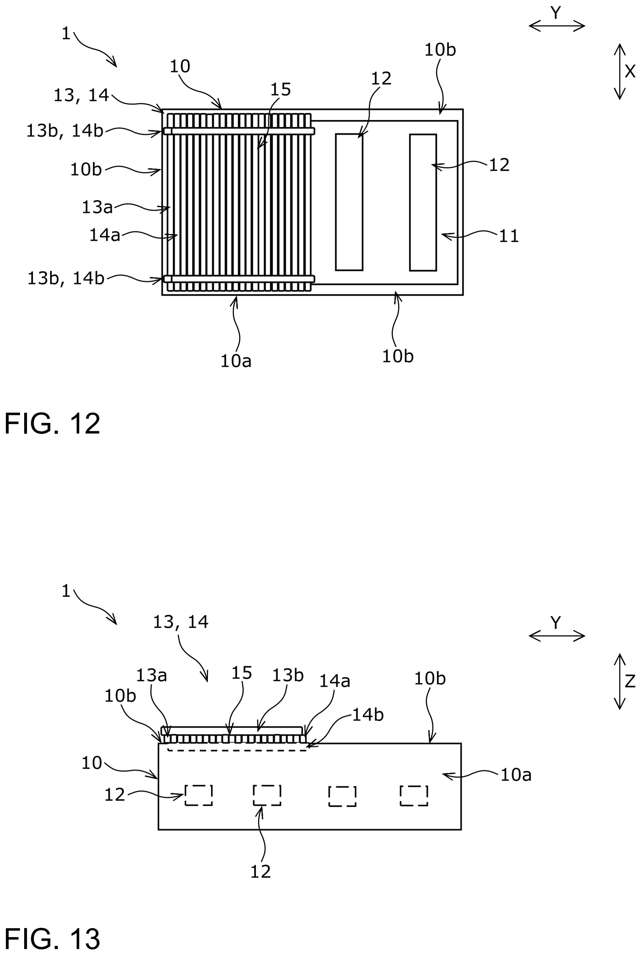

Figur 9 zeigt eine Darstellung der einzelnen erfindungsgemäßen Grillrostelemente 13, 14 entlang der Längsachse X mit zueinander hin orientierten Roststäben 13a, 14a sowie entlang der vertikalen Achse Z zueinander beabstandet. Figur 10 zeigt die Darstellung der Figur 9 im übereinander angeordneten Zustand. Figur 11 zeigt die Darstellung der Figur 10 entlang der Querachse Y. Figur 12 zeigt eine Darstellung des erfindungsgemäßen Grillrostelementepaares 13, 14 im übereinander angeordneten Zustand von oben. Figur 13 zeigt die Darstellung der Figur 12 entlang der Längsachse X.

Erfindungsgemäß sind die Zwischenräume 14c des zweiten Grillrostelements 14 jeweils ausgebildet, genau einen Roststab 13a des ersten Grillrostelements 13 aufzunehmen. Ebenso sind die Zwischenräume 13c des ersten Grillrostelements 13 jeweils ausgebildet, genau einen Roststab 14a des zweiten Grillrostelements 14 aufzunehmen. Dabei sind die Zwischenräume 13c, 14c der beiden Grillrostelemente 13, 14 jeweils ausgebildet, den jeweiligen Roststab 13a, 14a spielfrei aufzunehmen. Ferner sind die beiden Grillrostelemente 13, 14 ausgebildet, entlang der vertikalen Achse Z entgegengesetzt orientiert zu werden, um übereinander angeordnet zu werden.

Entsprechend kann beispielsweise das erste Grillrostelement 13 gegenüber der Horizontalen X, Y umgedreht, siehe Figur 9, und entlang der vertikalen Achse Z von oben auf das zweite Grillrostelement 14 so aufgesetzt werden, dass die Roststäbe 13a des ersten Grillrostelements 13 in den Zwischenräumen 14b des zweiten Grillrostelements 14 liegen und diese Zwischenräume 14b möglichst vollständig ausfüllen, siehe Figuren 10 und 11. Mit anderen Worten können die beiden Grillrostelemente 13, 14 ineinander geschachtelt werden, indem ein Grillrostelement 13, 14 gedreht auf das andere Grillrostelement 13, 14 gelegt wird.

Auf diese Art und Weise kann eine möglichst geschlossene sowie homogene glatte Grillfläche 15 geschaffen werden, siehe Figuren 12 und 13, welche vergleichbar der vollständig geschlossenen Grillfläche einer Grillplatte wie beispielsweise einer Plancha sein kann. Auch das Garen von Brotgerichten wie Pizza ist denkbar.

Ggfs. können die beiden Grillrostelemente 13, 14, vorzugsweise mittels wenigstens eines Paares von Scharnieren, umklappbar miteinander verbunden sein, um durch Umklappen entweder nebeneinander oder übereinander oberhalb der Gasbrenner 12 angeordnet zu werden. Dies kann zwar den Aufwand der Umsetzung durch die zusätzlichen mechanischen Elemente zur Realisierung des Umklappens erhöhen, jedoch die Handhabung für die Person als Benutzer vereinfachen sowie dafür sorgen, dass die beiden Grillrostelemente 13, 14 stets verbunden sind und so keines der beiden Grillrostelemente 13, 14 verloren gehen kann.

### Bezugszeichenliste (Bestandteil der Beschreibung)

- X: Längsachse; Tiefe; Länge
- Y: Querachse; Breite
- Z: vertikale Achse; Höhe
- X, Y: Horizontale; horizontale Ebene

- 13, 14: Grillrostelementepaar

- 1: Grillgerät; Gasgrillgerät
- 10: Gehäuse
- 10a: Gehäusefront
- 10b: Gehäuserand; Auflagefläche
- 11: Innenraum
- 12: Hitzequellen; Garbrenner
- 13: erstes Grillrostelement
- 13a: Roststäbe des ersten Grillrostelements 13
- 13b: Verbindungselemente des ersten Grillrostelements 13
- 13c: Zwischenräume des ersten Grillrostelements 13
- 14: zweites Grillrostelement
- 14a: Roststäbe des zweiten Grillrostelements 14
- 14b: Verbindungselemente des zweiten Grillrostelements 14
- 14c: Zwischenräume des zweiten Grillrostelements 14
- 15: Grillfläche; Bratfläche

## Patentansprüche

1. Grillgerät (1), vorzugsweise Gasgrillgerät (1),
mit wenigstens einer Hitzequelle (12), vorzugsweise einem Gasbrenner (12), und
mit wenigstens zwei Grillrostelementen (13, 14), welche jeweils ausgebildet sind, in der Horizontalen (X, Y) nebeneinander oberhalb der Hitzequelle (12) angeordnet zu werden,
wobei die beiden Grillrostelemente (13, 14) jeweils ausgebildet sind, Grillgut entlang der vertikalen Achse (Z) auf sich drauf aufzunehmen,
**dadurch gekennzeichnet, dass**
die beiden Grillrostelemente (13, 14) ausgebildet sind, ferner übereinander angeordnet zu werden und eine gemeinsame zumindest im Wesentlichen geschlossene Grillfläche (15) zu bilden.

2. Grillgerät (1) nach Anspruch 1,
wobei die beiden Grillrostelemente (13, 14) jeweils eine Mehrzahl von Roststäben (13a, 14a) aufweisen, welche jeweils parallel zueinander verlaufen,
wobei die beiden Grillrostelemente (13, 14) jeweils eine Mehrzahl von Zwischenräumen (13c, 14c) aufweisen, welche jeweils unmittelbar zueinander benachbarte Roststäbe (13a, 14a) zueinander beabstanden.

3. Grillgerät (1) nach Anspruch 2,
wobei die Zwischenräume (14c) des zweiten Grillrostelements (14) jeweils ausgebildet sind, genau einen Roststab (13a) des ersten Grillrostelements (13) aufzunehmen, und
wobei die Zwischenräume (13c) des ersten Grillrostelements (13) jeweils ausgebildet sind, genau einen Roststab (14a) des zweiten Grillrostelements (14) aufzunehmen.

4. Grillgerät (1) nach Anspruch 2 oder 3,
wobei die Zwischenräume (13c, 14c) der beiden Grillrostelemente (13, 14) jeweils ausgebildet sind, den jeweiligen Roststab (13a, 14a) spielfrei aufzunehmen.

5. Grillgerät (1) nach einem der Ansprüche 2 bis 4,
wobei die beiden Grillrostelemente (13, 14) jeweils wenigstens ein Paar von Verbindungselementen (13b, 14b) aufweisen, welche die Roststäben (13a, 14a) feststehend miteinander verbinden.

6. Grillgerät (1) nach einem der Ansprüche 2 bis 5,
wobei die beiden Grillrostelemente (13, 14) ausgebildet sind, entlang der vertikalen Achse (Z) entgegengesetzt orientiert zu werden, um übereinander angeordnet zu werden.

7. Grillgerät (1) nach einem der Ansprüche 2 bis 5,
ferner mit einem Gehäuse (10) mit einem Innenraum (11), in welchem die Hitzequelle (12) angeordnet ist,
wobei das Gehäuse (10) einen Gehäuserand (10b) aufweist, welcher den Innenraum (11) und die Hitzequelle (12) umschließt,
wobei die Roststäbe (13a, 14a) jeweils ausgebildet sind, mit ihren Enden auf dem Gehäuserand (10b) aufzuliegen, um nebeneinander oder übereinander oberhalb der Hitzequelle (12) angeordnet zu werden.

8. Grillgerät (1) nach einem der vorangehenden Ansprüche,
wobei die beiden Grillrostelemente (13, 14), vorzugsweise mittels wenigstens eines Paar von Scharnieren, umklappbar miteinander verbunden sind, um durch Umklappen entweder nebeneinander oder übereinander oberhalb der Hitzequelle (12) angeordnet zu werden.

9. Grillrostelementepaar (13, 14) zur Verwendung bei einem Grillgerät (1) nach einem der vorangehenden Ansprüche.

10. Outdoor-Küche (1)
mit wenigstens einem Grillgerät (1) nach einem der Ansprüche 1 bis 8.
